# FASCICULE DE BREVET EUROPEEN

(11) **EP 0 796 747 B1**
(45) Date de publication et mention de la délivrance du brevet: **14.11.2001**
(21) Numéro de dépôt: 97104192.6
(22) Date de dépôt: 12.03.1997
(51) Int. Cl.: B60C 17/06

(54) **Appui de sécurité en matériau élastomérique souple pour pneumatique**
Notlaufring aus weichem Elastomermaterial für einen Reifen
Soft elastomeric material safety ring for tyre

(30) Priorité: 19.03.1996 FR 9603492
(43) Date de publication de la demande: 24.09.1997
(73) Titulaire: COMPAGNIE GENERALE DES ETABLISSEMENTS MICHELIN-MICHELIN & CIE, F-63040 Clermont-Ferrand Cédex 01 (FR)
(72) Inventeur: Lacour, Jean-Charles, 63000 Clermont-Ferrand (FR)
(74) Mandataire: Dequire, Philippe Jean-Marie Denis

(56) Documents cités:
- EP-A- 0 363 639
- FR-A- 2 516 868
- FR-A- 2 609 667
- US-A- 4 248 286

## Description

La présente invention concerne les appuis de sécurité pour pneumatiques de véhicules que l'on monte à l'intérieur des pneumatiques, sur leurs jantes, pour reprendre la charge en cas de défaillance du pneumatique. Particulièrement, elle propose un appui perfectionné essentiellement réalisé en un matériau élastomérique souple.

L'utilisation d'un appui de sécurité de forme annulaire, réalisé en matériau élastomérique souple est connue depuis longtemps. Un tel appui présente les avantages de ne pas être sensibles aux chocs, d'offrir une bonne stabilité de performances dans le temps et de ne pas dégrader de façon trop marquée les caractéristiques de comportement du pneumatique en cas de roulage en appui.

En revanche, un tel appui a deux défauts majeurs. Un poids inacceptable compte tenu des exigences actuelles des constructeurs automobiles de réduction de poids des essieux de leurs véhicules et une endurance très insuffisante lors d'un roulage sous appui à cause de l'échauffement du matériau susceptible d'entraîner une dégradation thermique très rapide.

Pour résoudre ces défauts, la demande de brevet FR 2,532,591 propose un appui de sécurité essentiellement en matériau élastomérique, en forme de H symétrique relativement à un plan médian longitudinal avec une large gorge circonférentielle dans sa partie radialement inférieure pour l'alléger et réduire sa rigidité, la gorge circonférentielle située dans sa partie radialement extérieure étant un logement pour une sangle de maintien de l'appui sur la jante. Cet appui procure effectivement un poids réduit et une endurance acceptable, mais au prix d'une rigidité radiale de l'appui relativement élevée puisque supérieure à 750 kg/cm, ce qui nuit à la qualité du comportement du pneumatique lors d'un roulage en appui.

Le brevet US A 4 248 286 décrit un appui de sécurité destiné à être monté sur une jante à l'intérieur d'un pneumatique équipant un véhicule, pour supporter la bande de roulement de ce pneumatique en cas de perte de pression de gonflage, cet appui étant essentiellement réalisé en un matériau élastomérique souple, et comportant :
- une base sensiblement cylindrique destinée à s'adapter autour de la jante,
- un sommet sensiblement cylindrique destiné à entrer en contact avec la bande de roulement en cas de perte de pression, et laissant une garde par rapport à celle-ci à la pression nominale, et
- un corps annulaire reliant ladite base et ledit sommet, formé par des éléments radiaux indépendants.

L'invention a pour objet un appui de sécurité réalisé en un matériau essentiellement élastomérique souple dont le compromis entre les performances de comportement, de poids et d'endurance est sensiblement amélioré.

L'appui de sécurité, selon l'invention, est destiné à être monté sur une jante à l'intérieur d'un pneumatique équipant un véhicule, pour supporter la bande de roulement de ce pneumatique en cas de perte de pression de gonflage, cet appui ést essentiellement réalisé en un matériau élastomérique souple, et comporte :
- une base sensiblement cylindrique destinée à s'adapter autour de la jante,
- un sommet sensiblement cylindrique destiné à entrer en contact avec la bande de roulement en cas de perte de pression, et laissant une garde par rapport à celle-ci à la pression nominale, et
- un corps annulaire reliant ladite base et ledit sommet.
Cet appui est caractérisé en ce que le corps présente une pluralité d'évidements de direction sensiblement axiale, débouchant dans la face du corps destinée à être placée du côté extérieur du véhicule et s'étendant axialement jusqu'au moins la moitié du corps sans le traverser.

De préférence, le corps annulaire a la même largeur axiale que la base.

Les évidements transversaux de cet appui selon l'invention permettent une très forte réduction du poids de l'appui relativement à un appui plein et définissent deux zones du corps de l'appui dont le fonctionnement mécanique est très différent :
- une première zone annulaire, massive, telle que, dans toute la gamme de charges radiales qu'elle est susceptible de subir en appui, elle s'oppose à ces charges radiales par des contraintes de compression sans flambement ; la rigidité en compression de cette zone est suffisante pour ne subir que des déformations de faible amplitude et donc des échauffements limités ;
- une seconde zone annulaire, disposée du côté extérieur du véhicule, comprenant les évidements transversaux ouverts sur le côté du corps annulaire ; cette zone est notablement plus souple que la précédente et permet ainsi le maintien d'une zone de contact importante sans cloquage entre le sommet de l'appui et la surface radialement intérieure du sommet du pneumatique et ainsi procure une aire de contact importante entre le sol et la surface de la bande de roulement du pneumatique lors du roulage en appui en s'opposant à tout cloquage éventuel de cette bande de roulement.

Dans le paragraphe précédent, on entend par cloquage le fait que l'aire de contact entre, par exemple la surface de la bande de roulement et le sol, n'est pas continue mais au contraire comprend des zones d'interruption entre l'entrée et la sortie de cette aire de contact. Dans ces zones d'interruption, il y a un soulèvement de la bande de roulement qui n'est plus en contact avec le sol. Ce phénomène est dû aux forces de compression longitudinale qui s'exercent sur le sommet du pneumatique lors de sa mise à plat dans l'aire de contact et le cloquage résulte de la faible compressibilité du sommet du pneumatique. Le même phénomène existe pour les appuis. Dans le cas de l'appui de l'invention, c'est la compressibilité longitudinale du sommet souple autour de la zone évidée liée à la géométrie choisie et au matériau élastomérique souple qui permet de supprimer ces cloquages.

C'est un avantage décisif de l'appui de sécurité selon l'invention que la souplesse du sommet de l'appui permette son appui progressif contre la paroi radialement interne du sommet du pneumatique avec des pressions d'appui régulières et sans cloquage. En conséquence, comme nous l'avons vu, l'aire de contact entre la bande de roulement du pneumatique et le sol reste importante elle aussi, avec des risques de cloquage de la bande de roulement réduits et donc avec des pressions de contact homogènes. Un cloquage de cette bande de roulement occasionne immédiatement une distribution très inhomogène des pressions de contact et ainsi un comportement très dégradé du véhicule, notamment en virage.

Lors d'un roulage en virage, les pneumatiques les plus sollicités sont ceux situés du côté extérieur du virage. Ce sont ces pneumatiques qui supportent la charge la plus élevée du fait des forces centrifuges. Ils ont aussi souvent un carrossage marqué, c'est-à-dire que leur plan longitudinal moyen n'est pas disposé perpendiculairement au sol, mais est incliné lui aussi vers l'extérieur du virage. Tout cela entraîne une sollicitation plus forte de la bande de roulement des pneumatiques du côté vers l'extérieur du virage. Lors d'un roulage en appui, ce phénomène est aussi très marqué.

En revanche, comme les pneumatiques placés à l'intérieur du virage sont nettement moins sollicités, il n'est pas nécessaire d'avoir une disposition symétrique de l'appui de sécurité selon l'invention, cela permet de limiter la largeur nécessaire de l'appui ainsi que son poids.

Les évidements transversaux permettent également une ventilation efficace de l'appui qui limite son échauffement à des températures admissibles.

Cette combinaison assure un comportement excellent du véhicule avec au moins un pneumatique en appui puisque ce comportement est à peine modifiée par cette mise en appui. Cette combinaison donne aussi une endurance exceptionnelle puisque le demandeur a constaté qu'il est possible de réaliser, en appui, à pression de gonflage nulle, plusieurs centaines de kilomètres à des vitesses de l'ordre de 100 km/h.

Selon une variante avantageuse, les parois définies entre deux évidements adjacents sont arquées. Ces parois fléchissent ainsi très progressivement en cas de charge radiale avec des déformations de flexion. Cela permet d'éviter tout phénomène de flambement qui serait susceptible d'apporter une discontinuité marquée lors de la mise en appui.

La géométrie particulière des évidements précédents permet d'utiliser avantageusement des matériaux élastomériques souples de dureté shore A inférieure à 70, et préférentiellement entre 60 et 70.

Dans certaines applications, il peut aussi être avantageux de réaliser aussi des évidements débouchant du côté destiné à être placé à l'intérieur du véhicule. Ces évidements ont alors une extension sensiblement axiale notablement inférieure à ceux débouchant du côté opposé destiné à être placé à l'extérieur du véhicule.

Un mode de réalisation de l'invention est maintenant présentée à titre non limitatif à l'aide du dessin annexé dans lequel :
- la figure 1 présente une demi-coupe axiale d'un appui de sécurité selon l'invention monté sur une jante préférentielle à l'intérieur de la cavité d'un pneumatique ;
- la figure 2 est une demi-coupe similaire à celle de la figure 1 dans laquelle l'appui de sécurité est en appui ;
- la figure 3 est une vue latérale partielle de l'appui de sécurité de la figure 1, du côté des évidements ;
- la figure 4 présente, en demi-coupe axiale, un second mode de réalisation d'un appui selon l'invention ; et.
- la figure 5 est une vue illustrant la déformation imposée à un appui lors de son introduction dans la cavité d'un pneumatique.

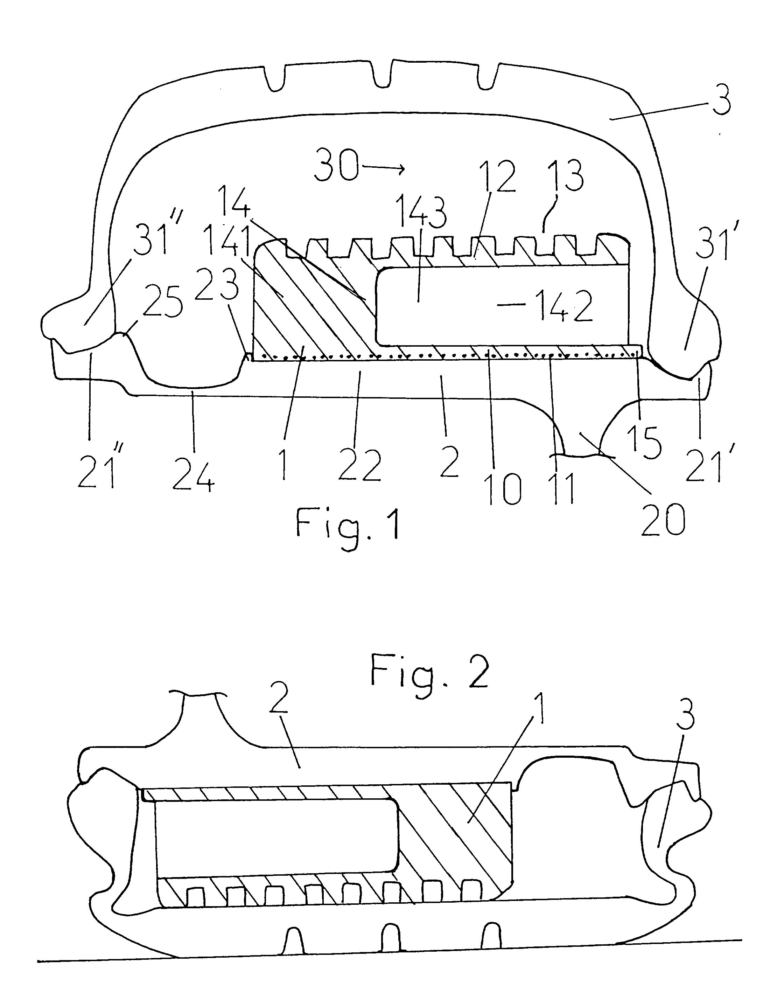

La figure 1 présente un appui de sécurité 1 selon l'invention monté autour d'une jante préférentielle 2 et à l'intérieur de la cavité 30 d'un pneumatique 3 correspondant. Cet exemple de réalisation est dimensionné pour l'équipement d'un petit véhicule de tourisme tel une Twingo de Renault. La dimension du pneumatique 3 est 145 x 360 où 145 correspond à la largeur du pneumatique en millimètres et 360 au diamètre de la jante 2 toujours en millimètres.

La jante 2 fait partie d'une roue monobloc. Cette jante 2 comprend axialement, en partant du côté du disque 20 de la roue, soit du côté destiné à être placé à l'extérieur du véhicule :
- un premier siège 21',
- une zone cylindrique plane 22 destinée à recevoir l'appui de sécurité 1 selon l'invention, le diamètre de cette zone 22 est supérieur à celui du siège 21' pour permettre un montage direct aisé de l'appui de sécurité par enfilage axial,
- une butée 23 de blocage transversal de l'appui,
- une gorge de montage 24, cette gorge 24 est de taille minimisée relativement aux gorges classiques de montage,
- un second siège 21" précédé d'un bossage de retenue 25, le diamètre de ce second siège est supérieur au diamètre de la zone 22. Une caractéristique de cette jante est que les deux sièges 21' et 21'' ont une pente inversée relativement aux sièges des jantes usuelles.

Le pneumatique 3 est conçu pour être monté sur la jante 2 et comporte en particulier deux bourrelets 31' et 31" de diamètres différents.

L'appui 1 comprend trois parties principales :
a) une base 10, de forme généralement annulaire et renforcée par une nappe 11 orientée longitudinalement sensiblement à 0°;
b) un sommet 12, sensiblement annulaire, avec sur sa paroi radialement extérieure des rainures longitudinales 13 ;
c) un corps annulaire 14 de liaison entre la base 10 et le sommet 12.

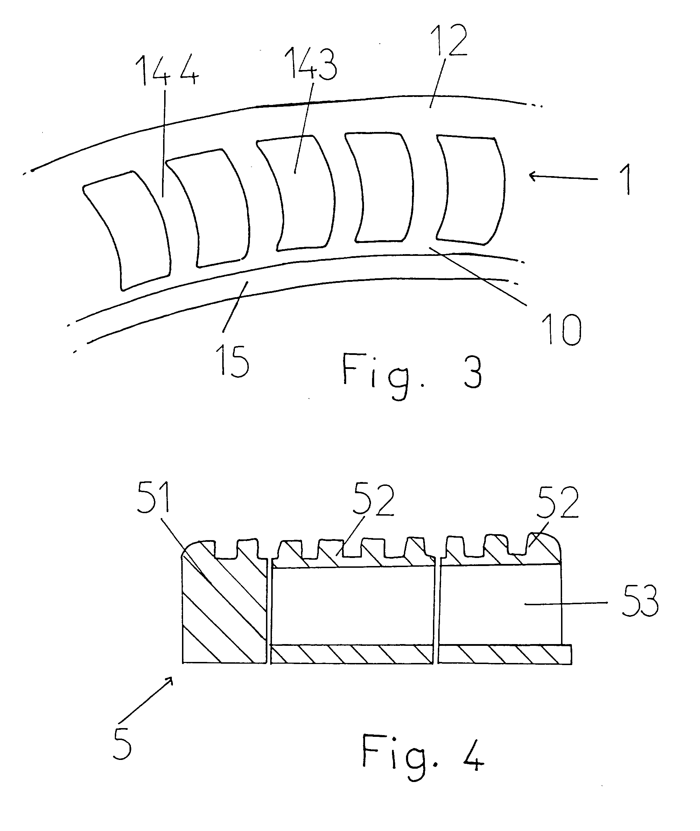

La coupe de la figure 1 montre une première partie massive 141 du corps 14 ainsi qu'une seconde partie 142 comportant des évidements 143 s'étendant axialement sur sensiblement plus de la moitié du corps 14 en débouchant du côté extérieur dans une direction sensiblement axiale. Ces évidements 143 sont (figure 3) régulièrement répartis sur toute la circonférence du corps 14 et définissent des parois radiales 144 qui assurent une liaison radiale directe entre le sommet 12 et la base 10 de l'appui 1. Les parois 144 ont une forme arquée. Cette géométrie a l'avantage de solliciter en flexion et non en compression ces parois axiales 144 lorsqu'elles sont écrasées. Les évidements 143 et donc les parois 144 sont suffisamment nombreux pour procurer un appui régulier lors du roulage sous appui.

Les évidements 143 permettent de diminuer de façon très sensible le poids de l'appui 1. A titre d'exemple, dans la réalisation préférentielle illustrée aux figures 1 à 3, avec des parois 144 d'épaisseur 7 mm, pour un pas du motif de 19 mm, s'étendant sur 70 % de la largeur axiale de l'appui, le poids ne représente que 67 % du poids de l'appui plein correspondant.

Les parois 144 radiales sont orientées axialement dans cet exemple de réalisation. Elles peuvent également s'écarter d'au plus 30 degrés par rapport à cette orientation axiale. L'augmentation de l'angle d'inclinaison relativement à la direction axiale augmente la rigidité radiale de l'appui tout en conservant les autres paramètres de géométrie et de rigidité de matériaux identiques. Au-delà de 30 degrés, l'augmentation de rigidité s'avère trop élevée.

Le matériau élastomérique choisi dans cet exemple de réalisation a une dureté shore A de 60 à 70. La rigidité radiale de la partie de l'appui 1 comprenant la partie massive 141 est de l'ordre de 420 kg/cm et la rigidité radiale de la partie comprenant la partie évidée 142 est 160 kg/cm. En conséquence, 70 % de la charge est portée par la partie pleine et 30 % par la partie comprenant les évidements.

Dans cet exemple, la base 10 de l'appui est renforcée d'une nappe 11 sensiblement orientée à zéro degrés. Cette nappe 11 est de préférence composée d'un renfort circonférentiel à haut module pour garantir une quasi-inextensibilité circonférentielle de l'appui et donc son maintien sur la jante 2 quelle que soit la vitesse de rotation du pneumatique. Cette nappe a aussi une faible rigidité de flexion pour autoriser une déformation importante nécessaire pour l'introduction de l'appui dans le pneumatique avant l'enfilage proprement dit de l'appui et du pneumatique lors de leur montage sur la jante 2.

Dans cet exemple de réalisation, la base comprend une butée cylindrique 15 destinée à bloquer en position le bourrelet adjacent 31' du pneumatique 3. Le second bourrelet 31" est bloqué par le bossage 25 usuel.

La hauteur de l'appui de sécurité est choisie de telle sorte de ne pas entraîner de contact pendant toutes les utilisations normales du pneumatique, même avec des surcharges momentanées notables. Cette hauteur correspond sensiblement à la moitié de la hauteur de la cavité torique 30 entre la jante et le sommet du pneumatique.

De préférence, on choisit comme matériau constitutif de l'appui un matériau à base d'un élastomère à chaînes saturées, tel un EPDM.

Pour améliorer la performance en endurance de l'appui on inclut de façon usuelle dans la cavité 30 du pneumatique 3, un lubrifiant pour lubrifier le contact éventuel entre le sommet de l'appui et le sommet du pneumatique.

Un tel appui de sécurité 1 peut être réalisé de façon usuelle par injection dans un moule par exemple.

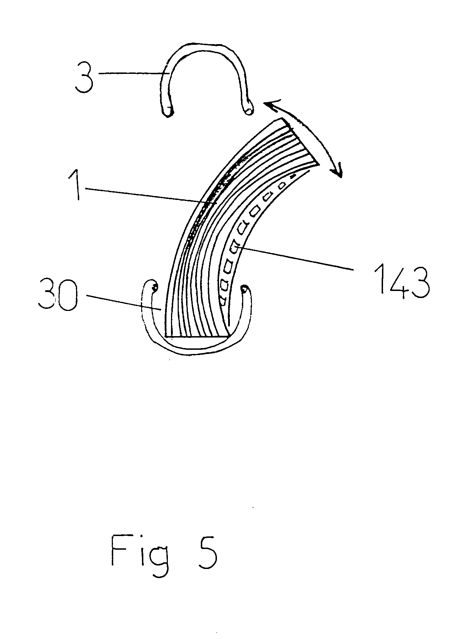

Pour assembler l'ensemble présenté à la figure 1, on commence par introduire l'appui de sécurité 1 dans la cavité torique 30 du pneumatique 3. On introduit une première partie de l'appui dans cette cavité du pneumatique. Puis, on fait basculer (voir figure 5) axialement à l'extérieur du plan longitudinal moyen de l'appui 1, la partie opposée de l'appui de telle sorte qu'elle puisse rentrer dans la partie opposée du pneumatique. Le fait que l'appui soit essentiellement réalisé en un matériau élastomérique souple facilite bien évidemment ce basculement qu'il est tout à fait possible de réaliser manuellement sans l'aide d'aucun outil. On introduit alors l'ensemble pneumatique et appui autour de la jante en commençant par le bourrelet 31" du pneumatique 3 de plus grand diamètre. On place ce bourrelet 31" dans la gorge de montage 24 et en même temps, on met en place l'appui 1 autour de la zone 22 de la jante 2. Puis, on fait passer le premier bourrelet 31" au-delà du bossage 25 et au-delà du siège 21" grâce à la gorge de montage 24. On monte ce premier bourrelet 31'' sur son siège 21" de l'extérieur, enfin on monte le second bourrelet 31' du pneumatique 3 de petit diamètre sur son siège 21' aussi à partir de l'extérieur de ce siège.

A la figure 2, on voit un ensemble de sécurité similaire à celui de la figure 1 en fonctionnement. Le sommet 12 de l'appui 1 est au contact de la surface radialement intérieur du sommet du pneumatique 3.

Un point critique du dimensionnement d'un appui 1 est la détermination de la largeur axiale de la partie massive annulaire 141. On définit la largeur axiale relative de cette partie massive annulaire 141 comme le rapport entre la largeur axiale de cette partie massive annulaire et la largeur axiale totale de l'appui. A titre d'exemple, pour une largeur axiale relative de 5 %, la durée de vie de l'appui avec un véhicule de tourisme de marque RENAULT, modèle Twingo a été de 150 kilomètres lors d'un roulage à pleine charge, à 100 km/h et avec une pression de gonflage nulle. Mais, dès une largeur de 15 %, la durée de vie dans les mêmes conditions de test a dépassé les 600 kilomètres. Bien entendu, une augmentation ultérieure de la largeur de la partie massive augmente le poids et diminue la ventilation de l'appui. Il faut donc déterminer au cas par cas les dimensions et rigidités les plus appropriées en fonction des véhicules à équiper.

Un appui de sécurité 1 selon l'invention peut aussi, bien entendu, être monté sur une jante usuelle en deux parties avec un fond de jante plat.

Selon un second mode de réalisation présenté à la figure 4, l'appui de sécurité 5 est constitué de plusieurs anneaux :
- un anneau 51 de section axiale sensiblement rectangulaire ; et
- un ou plusieurs éléments annulaires 52, ici deux, présentant une pluralité d'évidements 53 s'étendant sensiblement axialement sur toutes leurs largeurs et sensiblement régulièrement répartis sur leurs circonférences ;
ces éléments annulaires 52 sont destinés à être disposés sur la jante 2, relativement à l'anneau 51 du côté destiné à être placé vers l'extérieur du véhicule. Comme précédemment, chaque élément annulaire 51 et 52 comprend un sommet 12 destiné à venir en appui contre la surface radialement intérieure du sommet du pneumatique et une base 10 destiné à être en contact avec une jante 2. Les bases 10 comprennent un élément de renfort longitudinal 11 pour garantir une quasi-inextensibilité longitudinale.

Ce second mode de réalisation présente des propriétés très proches du premier mais est plus aisé à introduire dans un pneumatique en raison de la rigidité en flexion inférieure de ses différents éléments annulaires.

## Revendications

1. Appui de sécurité (1, 5) destiné à être monté sur une jante (2) à l'intérieur d'un pneumatique (3) équipant un véhicule, pour supporter la bande de roulement de ce pneumatique (3) en cas de perte de pression de gonflage, ledit appui (1, 5) étant essentiellement réalisé en un matériau élastomérique souple, et comportant :
- une base (10) sensiblement cylindrique destinée à s'adapter autour de la jante (2),
- un sommet (12) sensiblement cylindrique destiné à entrer en contact avec la bande de roulement en cas de perte de pression, et laissant une garde par rapport à celle-ci à la pression nominale, et
- un corps annulaire (14) reliant ladite base (10) et ledit sommet (12),
ledit appui est **caractérisé en ce que** ledit corps (14) présente une pluralité d'évidements (143, 53) de direction sensiblement axiale, débouchant dans la face dudit corps destinée à être placée du côté extérieur du véhicule et s'étendant axialement jusqu'au moins la moitié dudit corps (14) sans le traverser.

2. Appui (1, 5) selon la revendication 1, dans lequel le corps annulaire (14) a la même largeur axiale que la base (10).

3. Appui (1,5) selon l'une des revendications 1 ou 2, dans lequel les évidements (143, 53) adjacents sont séparés par des parois (144) arquées.

4. Appui (1, 5) selon l'une des revendications 1 à 3, dans lequel les évidements (143, 53) s'étendent avec une direction inférieure à 30 degrés relativement à la direction axiale.

5. Appui (1, 5) selon l'une des revendications 1 à 4, dans lequel le matériau élastomérique souple a une dureté shore A inférieure à 70 et préférentiellement entre 60 et 70.

6. Appui (1, 5) selon l'une des revendications 1 à 5, dans lequel le matériau élastomérique souple est à base d'un élastomère à chaînes saturées.

7. Appui (1, 5) selon l'une des revendications 1 à 6, dans lequel la base (10) comprend des moyens de renforcement longitudinaux (11) sensiblement inextensibles.

8. Appui (1, 5) selon l'une des revendications 1 à 7, dans lequel le sommet (12) comprend des rainures circonférentielles (13) sur sa surface radialement extérieure.

9. Appui (1, 5) selon l'une des revendications 1 à 8, dans lequel le corps annulaire (14) présente en outre une pluralité d'évidements de direction sensiblement axiale, débouchants dans la face dudit corps destinée à être placée du côté intérieur du véhicule.

10. Appui (5) selon l'une des revendications 1 à 9, réalisé en au moins deux morceaux annulaires (51, 52) indépendants destinés à être disposés côte à côte autour de la jante (2).

## Patentansprüche

1. Notlaufring (1, 5), der dazu bestimmt ist, auf einer Felge (2) im Inneren eines Reifens (3) montiert zu werden, der ein Fahrzeug ausstattet, um die Lauffläche dieses Reifens (3) im Falle des Verlustes des Aufpumpdrucks zu tragen, wobei der genannte Ring (1, 5) im wesentlichen aus einem weichen Elastomermaterial hergestellt ist und die folgenden Merkmale umfaßt:
- eine im wesentlichen zylindrische Basis (10), die dazu bestimmt ist, sich rund um die Felge (2) anzulegen,
- einen im wesentlichen zylindrischen Scheitel (12), der dazu bestimmt ist, im Falle des Druckverlustes in Berührung mit der Lauffläche zu treten, und der in Bezug auf diese bei Nenndruck einen Zwischenraum beläßt, und
- einen kreisringförmigen Körper (14), der die genannte Basis (10) und den genannten Scheitel (12) verbindet,
wobei der genannte Ring **dadurch gekennzeichnet ist, daß** der genannte Körper (14) eine Vielzahl von Ausnehmungen (143, 53) mit im wesentlichen axialer Richtung darbietet, die in die Fläche des genannten Körpers einmünden, die dazu bestimmt ist, an der Außenseite des Fahrzeugs angeordnet zu werden, und die sich axial bis mindestens zur Hälfte des genannten Körpers (14) erstrecken, ohne ihn zu durchsetzen.

2. Ring (1, 5) nach Anspruch 1, worin der kreisringförmige Körper (14) die gleiche axiale Breite aufweist wie die Basis (10).

3. Ring (1, 5) nach einem der Ansprüche 1 oder 2, worin die benachbarten Ausnehmungen (143, 53) durch bogenförmige Wände (144) getrennt sind.

4. Ring (1, 5) nach einem der Ansprüche 1 bis 3, worin die Ausnehmungen (143, 53) sich unter einer Richtung von weniger als 30° bezüglich der Axialrichtung erstrekken.

5. Ring (1, 5) nach einem der Ansprüche 1 bis 4, worin das weiche Elastomermaterial eine Shore-Härte A von weniger als 70 und bevorzugt zwischen 60 und 70 aufweist.

6. Ring (1, 5) nach einem der Ansprüche 1 bis 5, worin das weiche Elastomermaterial auf der Basis eines Elastomers mit gesättigten Ketten gebildet ist.

7. Ring (1, 5) nach einem der Ansprüche 1 bis 6, worin die Basis (10) im wesentlichen undehnbare Längs-Verstärkungsmittel (11) umfaßt

8. Ring (1, 5) nach einem der Ansprüche 1 bis 7, worin der Scheitel (12) Umfangsrillen (13) auf der Außenoberfläche aufweist.

9. Ring (1, 5) nach einem der Ansprüche 1 bis 8, worin der ringförmige Körper (14) außerdem eine Vielzahl von Ausnehmungen mit im wesentlichen axialer Ausrichtung aufweist, die in die Stirnfläche des genannten Körpers einmünden, die dazu bestimmt ist, auf der Innenseite des Fahrzeugs angeordnet zu werden.

10. Ring (5) nach einem der Ansprüche 1 bis 9, aus mindestens zwei unabhängigen, kreisringförmigen Stücken (51, 52) hergestellt, die dazu bestimmt sind, nebeneinanderliegend rund um die Felge (2) angeordnet zu werden.

## Claims

1. A safety support (1, 5) intended to be mounted on a rim (2) on the inside of a tyre (3) fitted on a vehicle, to support the tread of this tyre (3) in the event of a loss of inflation pressure, said support (1, 5) being essentially made of a flexible elastomeric material, and comprising:
- a substantially cylindrical base (10) intended to be adapted around the rim (2),
- a substantially cylindrical crown (12) intended to come into contact with the tread in the event of a loss of pressure, and leaving a clearance relative to the latter at rated pressure, and
- an annular body (14) connecting said base (10) and said crown (12),
said support being **characterised in that** said body (14) has a plurality of cutouts (143, 53) of substantially axial direction, opening into that face of the body which is intended to be placed on the outside of the vehicle and extending axially as far as at least half of said body (14) without passing right through it.

2. A support (1, 5) according to Claim 1, in which the annular body (14) has the same axial width as the base (10).

3. A support (1, 5) according to one of Claims 1 or 2, in which the adjacent cutouts (143, 53) are separated by arched walls (144).

4. A support (1, 5) according to one of Claims 1 to 3, in which the cutouts (143, 53) extend at a direction less than 30 degrees relative to the axial direction.

5. A support (1, 5) according to one of Claims 1 to 4, in which the flexible elastomeric material has a Shore A hardness less than 70 and preferably between 60 and 70.

6. A support (1, 5) according to one of Claims 1 to 5, in which the flexible elastomeric material is based on an elastomer having saturated chains.

7. A support (1, 5) according to one of Claims 1 to 6, in which the base (10) comprises substantially inextensible longitudinal reinforcement means (11).

8. A support (1, 5) according to one of Claims 1 to 7, in which the crown (12) comprises circumferential grooves (13) on its radially outer surface.

9. A support (1, 5) according to one of Claims 1 to 8, in which the annular body (14) furthermore has a plurality of cutouts of substantially axial direction, opening into that face of the body which is intended to be placed on the inside of the vehicle.

10. A support (5) according to one of Claims 1 to 9, made of at least two independent annular pieces (51, 52) intended to be arranged side by side around the rim (2).
